# EUROPEAN PATENT APPLICATION

(11) **EP 0 606 768 A2**
(43) Date of publication of application: **20.07.1994**
(21) Application number: 93310578.5
(22) Date of filing: 24.12.1993
(51) Int. Cl.: G06K 15/02, G06F 15/62, G06F 15/20

(54) **Registration dot pattern data processor of a text processing apparatus**

(30) Priority: 28.12.1992 JP 359960/92
(71) Applicant: BROTHER KOGYO KABUSHIKI KAISHA, Nagoya-shi, Aichi-ken (JP)
(72) Inventor: Ueno, Hideo, c/o Brother Kogyo K.K., Nagoya-shi, Aichi-ken (JP); Ito, Chitoshi, c/o Brother Kogyo K.K., Nagoya-shi, Aichi-ken (JP); Kanda, Sachie, c/o Brother Kogyo K.K., Nagoya-shi, Aichi-ken (JP); Ishida, Minako, c/o Brother Kogyo K.K., Nagoya-shi, Aichi-ken (JP)
(74) Representative: Senior, Alan Murray

(57) **Abstract**

In creating a registration pattern, when the enlargement/reduction key is pressed, the enlargement/reduction screen is displayed. When the cursor up-moving or cursor down-moving key is operated, the size pointer value indicative of the size from a table in which the character size, tape width, and size of registration pattern are made correspondent, is incremented or decremented. A registration data input screen of a size based on the size pointer value and a registration pattern derived from the registration pattern and rendered from the enlargement/reduction process depending on the size is displayed. This tape printing apparatus is capable of easily creating a large registration pattern made up of a large number of dots in a short time.

## Description

### BACKGROUND OF THE INVENTION

### 1. Field of the Invention

The present invention relates to a registration dot pattern data processor of a text processing apparatus and, particularly, to a dot pattern data processor capable of enlarging dot pattern data of characters and marks, which are to be registered by the user, to an intended size at the time of creation.

### 2. Description of Related Art

Conventional word processors or the like for Japanese or English texts have a basic arrangement including a keyboard, a display device capable of displaying several lines of text data and a dot-wise printing mechanism. Such word processors are operative to display entered text data on the display device, store the data in a text memory, and print the data on a sheet of print paper based on the print format, which includes the kind of print paper and the print size.

Some word processors put into practice recently have a function of storing profile line data (outline font data) for defining character profile lines of printing characters and symbols in a non-volatile memory. These word processors are provided additionally with a pattern registration function in which registration patterns including characters, marks and illustrations intended by the user are printed arbitrarily as dot patterns of a certain number of dots (e.g., 48 dots or 56 dots) by moving a small pointer or cursor. The registration patterns are stored in a storage medium such as a floppy disk. Accordingly, it is possible to print any single registration pattern data in an arbitrary character size at an arbitrary position in a text.

The above-mentioned conventional word processors having the pattern registration function are designed to print the intended registration pattern in a dot form of 48 dots or 56 dots. Although a more precise shape of registration pattern can be created by increasing the number of dots, such a pattern requires a great deal of time and labor in the creation.

### SUMMARY OF THE INVENTION

An object of the present invention is to provide a registration dot pattern data processor of a text processing apparatus capable of creating a large registration pattern made up of a large number of dots easily in a short time.

To achieve the above and other objects, the registration dot pattern data processor of a text processing apparatus according to this invention includes input means for entering characters, symbols and various commands, printing means for printing characters and marks in the form of dot patterns on a printing medium, display means including a display device and display control means. This processor has mode setting means for setting a registration mode for producing dot pattern data of a character or mark and registering the data. There is also original registration data storage means for storing, in the registration mode, original registration dot pattern data of the character or mark that has been entered on a registration data input screen displayed on the display device. Size setting means sets an enlargement size for the character or mark entered in the registration mode. Size conversion processing means evaluates the magnification factor of enlargement based on the original size of the character or mark entered on the registration data input screen and the size set by the size setting means and produces enlarged registration dot pattern data depending on the magnification factor for the original registration dot pattern data. Registration data storage means stores the registration dot pattern data produced by the size conversion processing means.

The size conversion processing means may be designed to produce pseudo registration dot pattern data that is derived from original registration dot pattern data and multiplied by B in the number of dots in the longitudinal and lateral directions based on a ratio B/A for a setup size B and original size A. The size conversion processing means also produces registration dot pattern data that is derived from the pseudo registration dot pattern data and reduced to 1/A in the number of dots according to a predetermined rule.

In this registration dot pattern data processor of a text processing apparatus, the original registration dot pattern data storage means operates to store original registration dot pattern data of the character or mark entered on the registration data input screen displayed on the display device in the registration mode of making and registering dot pattern data of a character or mark set by the mode setting means. When an enlargement size of the character or mark entered in the registration mode is set by the size setting means, the size conversion processing means evaluates the magnification factor of enlargement based on the original size of the character or mark entered on the registration data input screen and the size set by the size setting means and creates enlarged registration dot pattern data depending on the magnification factor. The registration data storage means stores the registration dot pattern data created by the size conversion processing means.

In this manner, the original registration dot pattern data corresponding to the original size and entered on the registration data input screen is converted into enlarged registration dot pattern data depending on the magnification factor at the time of size setting. Therefore, even in the case of a large number of dots of a registration dot pattern, a large-sized registration pattern can be created easily in a short time by merely creating an original registration dot pattern of a small size.

As explained above, this registration dot pattern data processor is provided with mode setting means, original registration data storage means, size setting means, size conversion means and registration data storage means. Original registration dot pattern data entered in a registration data input screen corresponding to the original size is stored by being formed in enlarged registration dot pattern data depending on the magnification factor at the time of setting of the setup size. Therefore, even where a registration dot pattern is made up of a large number of dots, a large-sized registration pattern can be created easily in a short time by merely creating an original registration dot pattern of a small size.

Further, the size conversion process means produces pseudo registration dot pattern data that is derived from original registration dot pattern data and multiplied by B in the number of dots in the longitudinal and lateral directions based on a ratio B/A for a setup size B and original size A. The registration dot pattern data is derived from the pseudo registration dot pattern data and reduced to 1/A in the number of dots according to a predetermined rule. This enables enlargement while virtually retaining the shape of the registration dot pattern data, as compared with the case of enlargement following the reduction of the original registration dot pattern data.

### BRIEF DESCRIPTION OF THE DRAWINGS

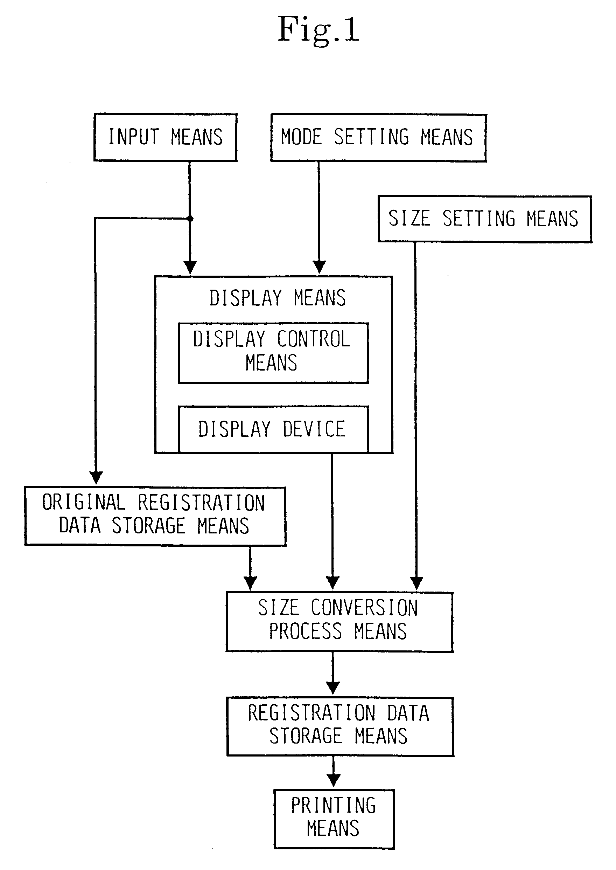

Fig. 1 is a functional block diagram showing the registration dot pattern data processor according to this invention.

Fig. 2 is a plan view of the tape printing apparatus.

Fig. 3 is a plan view of the printing mechanism.

Fig. 4 is a block diagram of the control system of the tape printing apparatus.

Fig. 5 is a table explaining the data format of the number-of-dot correspondence table.

Fig. 6 is a flowchart of the tape print control routine.

Fig. 7 is a flowchart of the pattern creation-registration process control routine.

Fig. 8 is a flowchart of the pattern creation process control routine.

Fig. 9 is a flowchart of the pattern data enlargement/reduction process control routine.

Fig. 10 is a flowchart of the pattern size enlargement/reduction process control routine.

Fig. 11 is a diagram showing an example of a display of the text input screen.

Fig. 12 is a diagram showing an example of a display of the registration number selection screen.

Fig. 13 is a diagram showing an example of a display of the registration data creation screen.

Fig. 14 is a diagram showing an example of a display of the enlarged registration data input screen.

Fig. 15 is an explanatory diagram explaining the enlargement of the original registration dot pattern data in the longitudinal direction.

Fig. 16 is an explanatory diagram of the creation of an enlarged/reduced registration dot pattern.

Fig. 17 is a diagram showing an example of a registration pattern printed on a print tape having a tape width of 9 mm.

### DETAILED DESCRIPTION OF PREFERRED EMBODIMENTS

An embodiment of this invention is explained with reference to the drawings. This embodiment is the application of the invention to a tape printing apparatus for Japanese and English texts capable of printing many characters and created patterns including Kanji, Hiragana and alphabetic characters on a print tape.

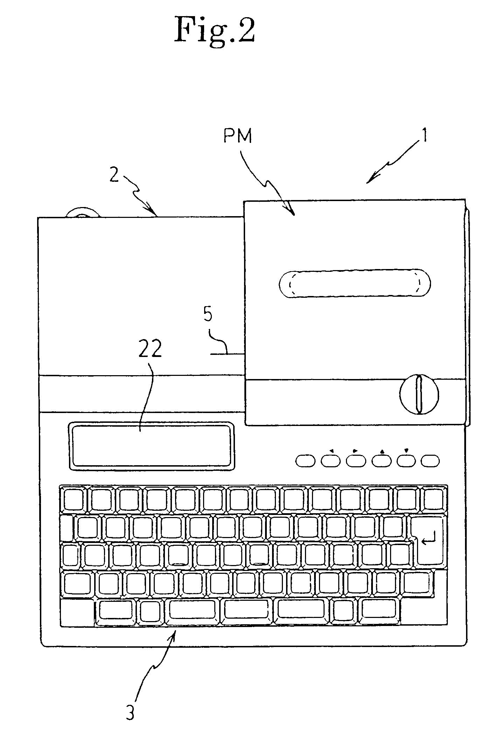

As shown in Fig. 2, a keyboard 3 is disposed at the front of a main frame 2 of the tape printing apparatus 1. A printing mechanism PM is disposed inside the main frame 2 in the rear of the keyboard 3, and a compact liquid crystal display device 22 capable of displaying two lines of characters and symbols is provided in the rear of the keyboard 3.

Provided on the keyboard 3 are character keys that generate multiple kinds of character codes for alphabetic, Hiragana, numeric and symbolic characters. There are also a space key, cursor moving keys that move a cursor K displayed on the display device 22 upward, downward, rightward and leftward, a non-conversion key, a conversion key, and a registration key for registering a created pattern of character or mark. An enlargement/reduction key is used to specify the enlargement or reduction of a created pattern, and function keys are used to execute separate functions by operating in combination with other keys such as the cursor moving keys. An execution key is used to establish the setting or the like during the process, and a print key is used to initiate printing. A tape feed key is used to feed the print tape 5, and a power key turns the power supply on and off.

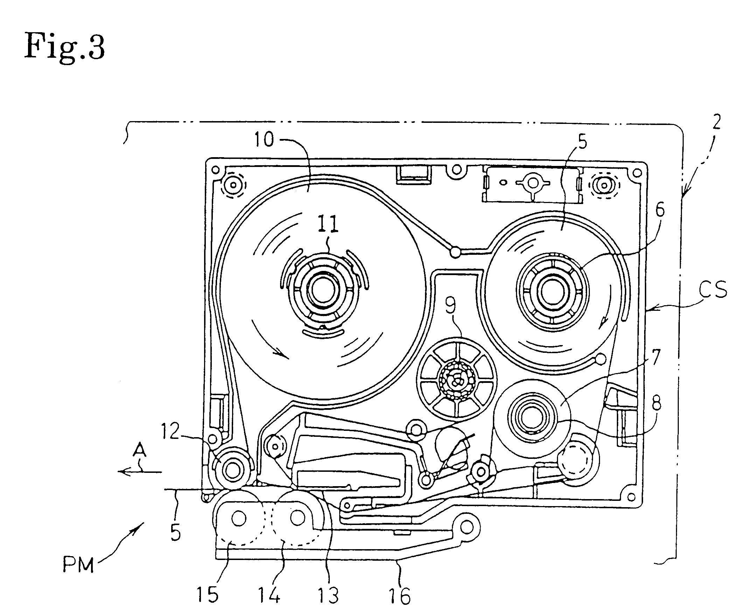

Next, the printing mechanism PM is explained in brief with reference to Fig. 3. A tape cassette CS of a rectangular shape is detachably attached to the main frame 2 of the tape printing apparatus 1. The tape cassette CS includes a rotatable tape spool 6 on which a print tape 5 made of transparent film is wound, and a ribbon supply spool 8 on which an inked ribbon 7 is wound. A take-up spool 9 takes up the inked ribbon 7. A supply spool 11 has a double-sided tape 10 wound thereon having the same width as the print tape 5, with separation paper being stuck on its outer surface. A contact roller 12 brings the print tape 5 and double-sided tape 10 in contact with each other. There are five kinds of tape cassettes CSs that are dedicated to print tapes 5 of widths of 6 mm, 9 mm, 12 mm, 18 mm and 24 mm.

At the position where the print tape 5 and inked ribbon 7 coincide, there is a thermal head 13 provided on the tape printing apparatus 1. Pivotally rotatably supported on a support member 16 are a platen roller 14 that presses the print tape 5 and inked ribbon 7 onto the thermal head 13 and a feed roller 15 that presses the print tape 5 and double-sided tape 10 onto a contact roller 12. Arrayed closely in the vertical direction on the thermal head 13 are a plurality of thermal elements, preferably 128 in number.

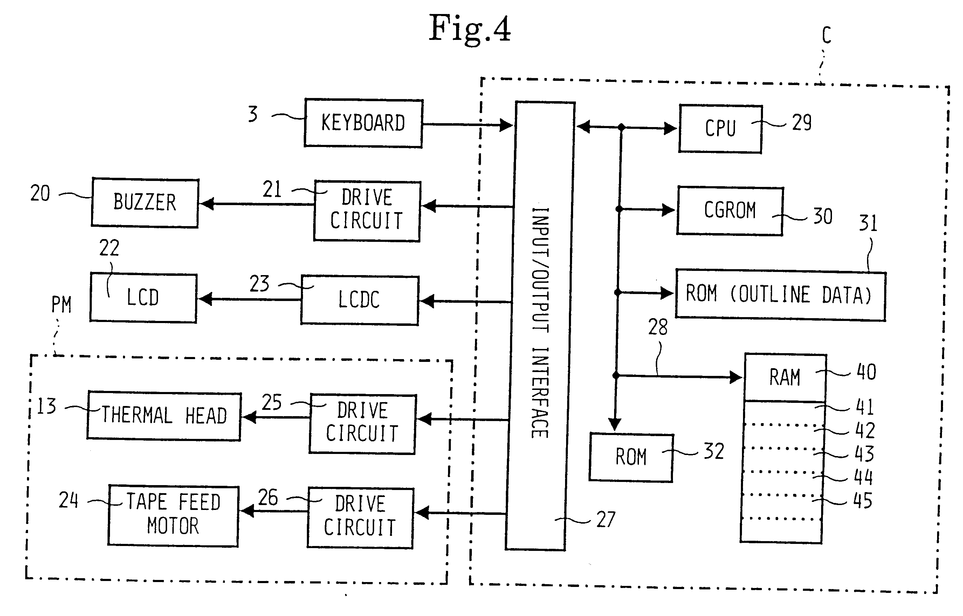

Accordingly, when a tape feed motor 24 (see Fig. 4) is driven in a prescribed direction to drive the contact roller 12 and take-up spool 9 synchronously in a prescribed direction with the thermal elements being activated, a character or symbol is printed in the form of multiple dot columns on the print tape 5. The print tape 5 that has been printed is fed in the tape feed direction A as seen in Fig. 3 in a state of contact on its print surface with the double-sided tape 10. For details of the printing mechanism PM, refer to U.S. Patent No. 5,188,469.

The tape printing apparatus 1 has its control system arranged as shown in the block diagram of Fig. 4. The keyboard 3, a display controller (LCDC) 23 including a display RAM that delivers display data to the liquid crystal display device (LCD) 22, and a drive circuit 21 for activating an alarm buzzer 20 are connected to an input/output interface 27 of a controller C. A drive circuit 25 for driving the thermal head 13, a drive circuit 26 for driving the tape feed motor 24 that rotates the spools, on which the print tape 5, inked ribbon 7 and double-sided tape 10 are wound, are also connected to the input/output interface.

The controller C consists of a CPU 29, the input/output interface 27 in connection with the CPU 29 through a bus 28 such as a data bus, a CGROM 30, ROMs 31 and 32, and a RAM 40. A registration dot pattern data processor includes the controller C and the registration key and cursor moving keys on the keyboard 3.

The CGROM (pattern data memory) 30 stores dot pattern data for display in correspondence to code data of individual characters. The ROM (outline data memory) 31 stores profile line data (outline data) that define profile lines of characters of each font (Gothic, Mincho, etc.) for printing in correspondence to code data of individual characters.

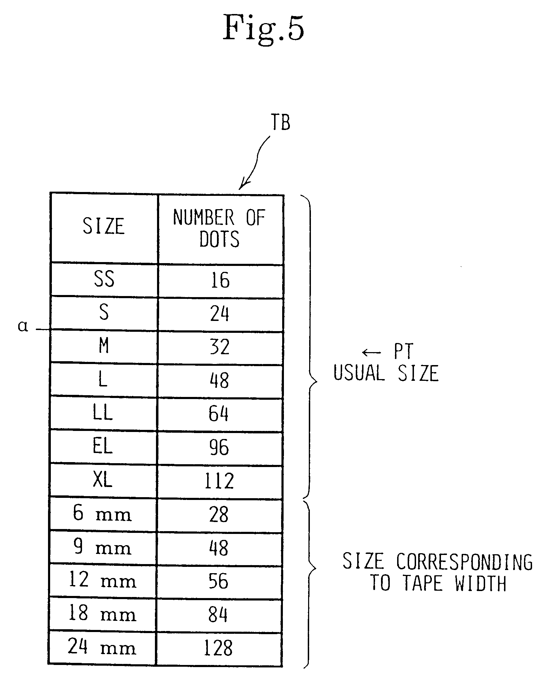

The ROM 32 stores a display drive control program for controlling the display controller 23 responsive to code data of a literal, numeric and symbolic character entered from the keyboard 3. Also stored in the ROM 32 are an image development process control program for converting outline data corresponding to each code data in the text memory 41 into dot pattern data for printing and developing the resulting data in a printing buffer 45. The ROM 32 further has a print drive control program for reading data out of the print buffer 45 and driving the thermal head 13 and tape feed motor 24 and a tape print control program explained later. The ROM 32 further stores a size-dot correspondence table TB in which "size" such as SS, S and M and "number of dots" indicative of the size of registration pattern are made correspondent with each other, as shown in Fig. 5. The "size" includes the tape width (6 mm, 9 mm and so on), and a "number of dots" optimal to each tape width is provided correspondingly.

The text memory 41 in the RAM 40 stores code data of characters and symbols entered from the keyboard 3 as text data. A registration memory 42 includes ten registration data memories 42a-42j in correspondence to registration numbers "0" to "9". Each of the registration data memories 42a-42j stores original registration dot pattern data or registration dot pattern data of a created character or mark and a size pointer value indicative of the data size. A size pointer memory 43 stores the top address of 12 size items as a size pointer value PT that represents the correspondence between the size and number of dots stored in the size-dot correspondence table TB. An enlargement/reduction dot pattern memory 44 stores enlargement/reduction dot pattern data produced from the created original registration dot pattern data through the enlargement process or reduction process. The print buffer 45 stores dot pattern data of a character or symbol in the form of image development and registration dot pattern data read out of the registration memory 42.

The text memory 41 and registration memory 42 in the RAM 40 are battery backed-up, and their contents are retained even after power to the tape printing apparatus 1 is turned off.

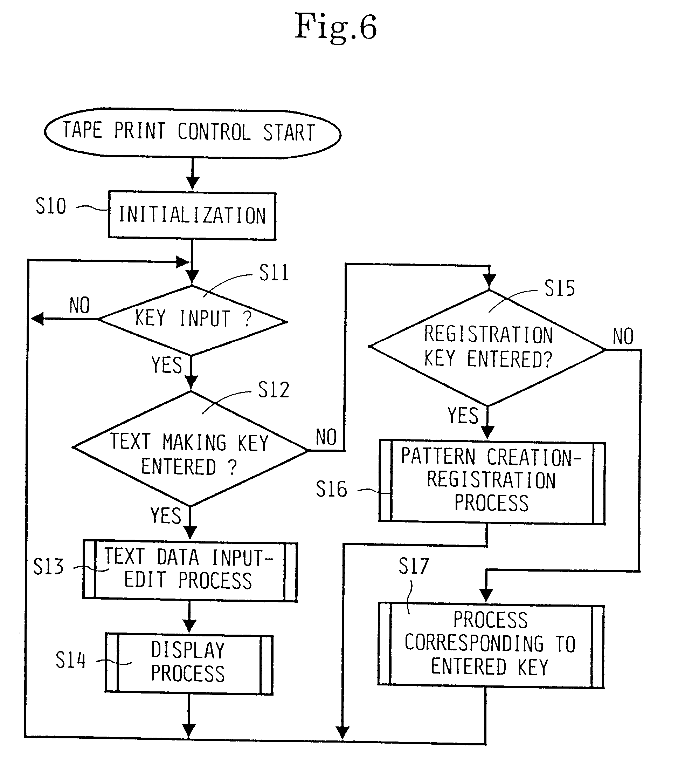

Next, the tape print control routine executed by the controller C of the tape printing apparatus 1 is explained on the flowcharts of Fig. 6 to Fig. 10. In the figures, symbols Si (i = 10, 11, 12, ..) signify the steps of the process.

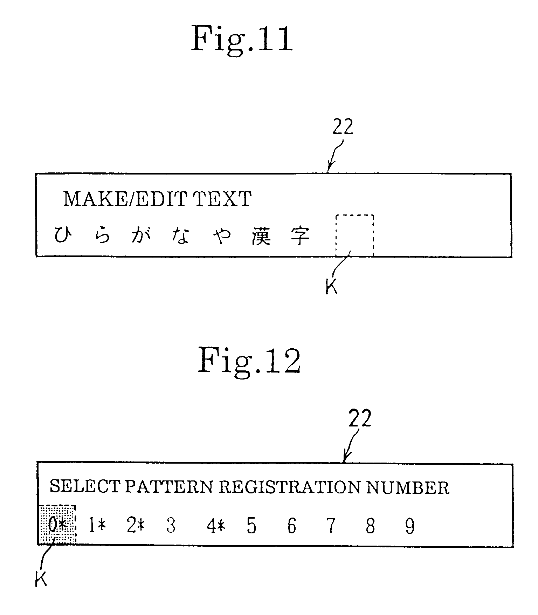

When power is turned on through the operation of the power key, the tape print control begins. Initially, the printing mechanism PM and memories 43-45 excluding the memories 41 and 42 are initialized, e.g., cleared, and a text input screen for entering a text is displayed on the display device 22 (S10). For example, on the display device 22 as shown in Fig. 11, "MAKE/EDIT TEXT" is displayed on the upper line, and a text input screen for displaying 12 characters and symbols entered is displayed on the lower line.

Next, when a text making key, which is any of the character keys for Hiragana, Katakana, etc., numeric keys, conversion key and non-conversion key, is operated (S11, S12: yes), the text data input-edit process control is carried out (S13). This process control stores entered characters as a text in the text memory 41 by converting Hiragana into Kanji or without converting Hiragana, Katakana, numeric or alphabetic characters. Converted Kanji or non-converted Hiragana, Katakana, numeric or alphabetic characters are displayed on the display device 22 sequentially at positions indicated by the cursor K (S14). The program then returns to S11. For example, an entered text is displayed on the display device 22. In Fig. 11, Japanese characters are displayed that read "Hiragana and Kanji" in English.

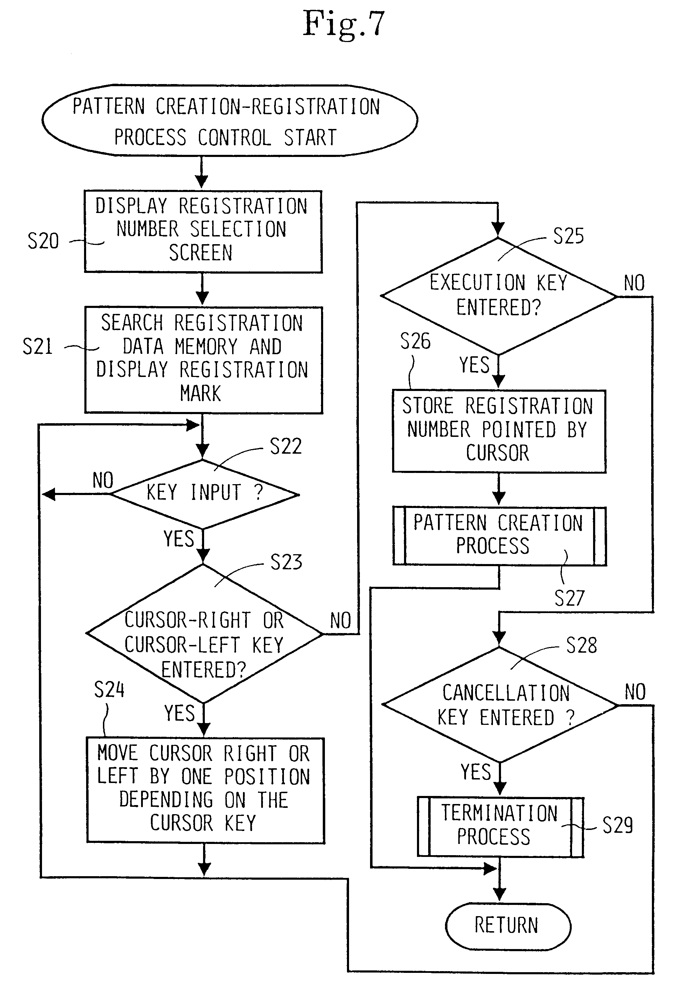

Next, when the registration key is operated (S11: yes, S12: no, S15: yes), the registration mode is set, and the pattern creation-registration process control (refer to Fig. 7) is carried out (S16).

Once this control has started, a registration number selection screen is first displayed on the display device 22 (S20). Then, all registration data memories 42a-42j are searched and registration numbers for the stored and registered original registration dot pattern data added by a registration mark are displayed (S21). For example, as shown in Fig. 12, the registration number selection screen, which contains ten registration numbers "0" to "9", is displayed on the display device 22. The registration mark "*" is appended at the right of the registration numbers "0" to "2" and "4," indicating that the original registration dot pattern data for these registration numbers are already stored and registered.

Next, when the cursor right or cursor left moving key is operated (S22, S23: yes), the displayed cursor K is moved by one position to the right or left registration number depending on the type of cursor moving key (S24). The program then returns to S22.

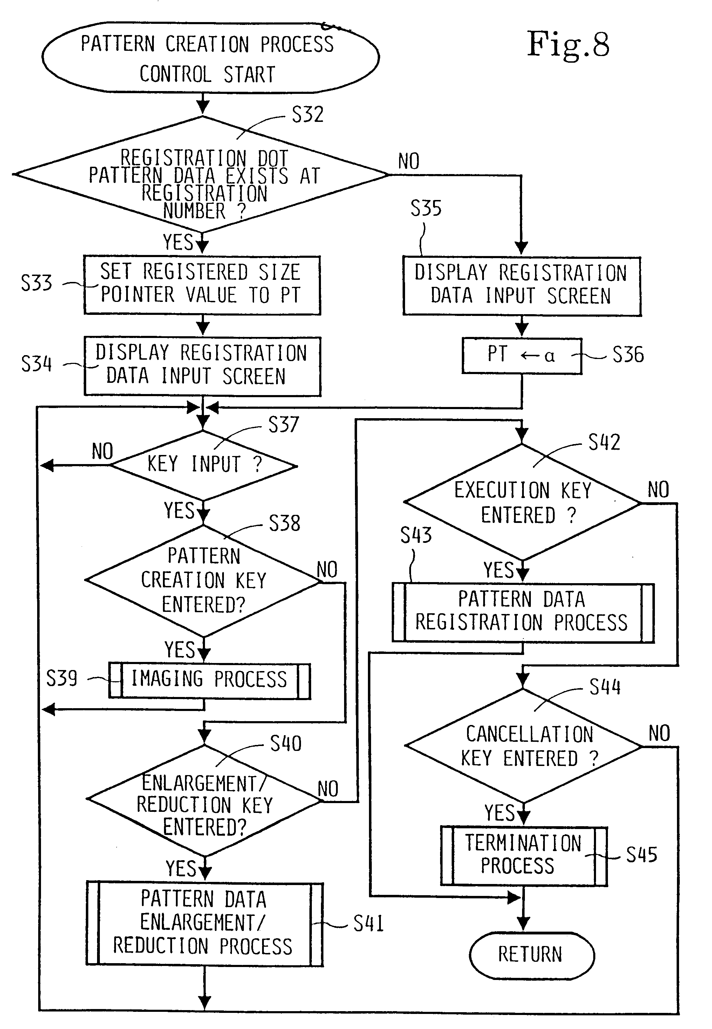

When the execution key is operated (S22: yes, S23: no, S25: yes), the registration number X pointed by the cursor K is stored in the work buffer in the RAM 40 (S26), and the pattern creation process control (refer to Fig. 8) is carried out (S27).

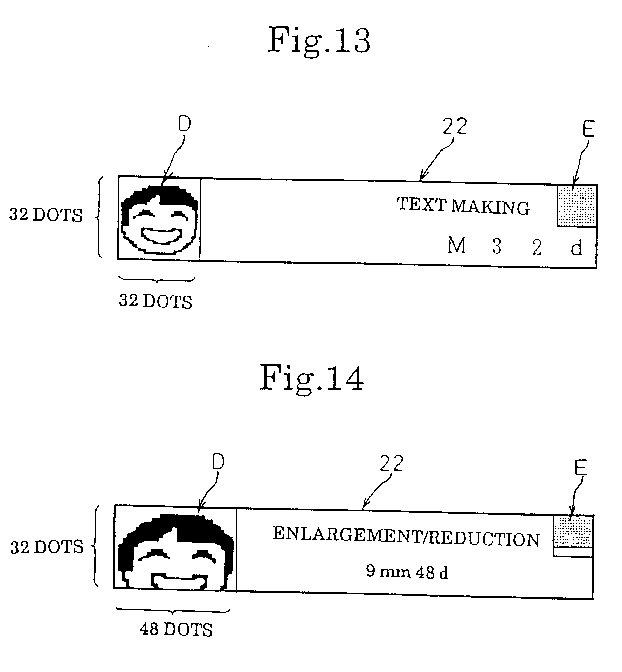

After this control has started, if registration dot pattern data does not exist in a registration data memory 42a-42j corresponding to the registration number X (S32: no), the registration data input screen for the default size is displayed on the display device 22 (S35). Also, the top address a of the default size item is set to the size pointer value PT (S36). For example, as shown in Fig. 5 and Fig. 13, the registration data input screen for the default size of "M" and 32 dots is displayed on the display device 22 and the top address α of the size item "M" is set to the size pointer value PT. The display device 22 has a registration dot pattern display area D at its left end. The display area D can display 32 dots in the longitudinal direction so as to allow display in the lateral direction by enlargement or reduction in proportion to the number of dots of the current size. At the right end of the upper line of the display device 22, there is provided a display range indication area E for indicating the display range of the registration dot pattern display area D by inversion for the dot pattern of the current size. Namely, for size "M", which has 32 dots longitudinally and laterally, the entire dot pattern can be displayed at once.

When this control has begun, if registration dot pattern data exists in a registration data memory 42a-42j corresponding to a registration number X (S32: yes), the size pointer value that is registered by being appended to the dot pattern data is set to the size pointer PT (S33). The registration data input screen for that size pointer value is displayed, and the registration dot pattern data is displayed in the registration dot pattern display area D (S34).

Next, when a cursor moving key alone is operated or the pattern creation key accompanied by a cursor moving key or a function key is operated (S37, S38: yes), the imaging process control is carried out (S39). This process control stores the original registration dot pattern data imaged in the form of 1's dots or 0's dots depending on the pattern creation key in a registration data memory 42a-42j corresponding to the selected registration number X. Then, the program returns to S37. For example, as shown in Fig. 13, a "face" is imaged as a registration pattern, and the original registration dot pattern data for the image is stored in one of the registration data memories 42a-42j.

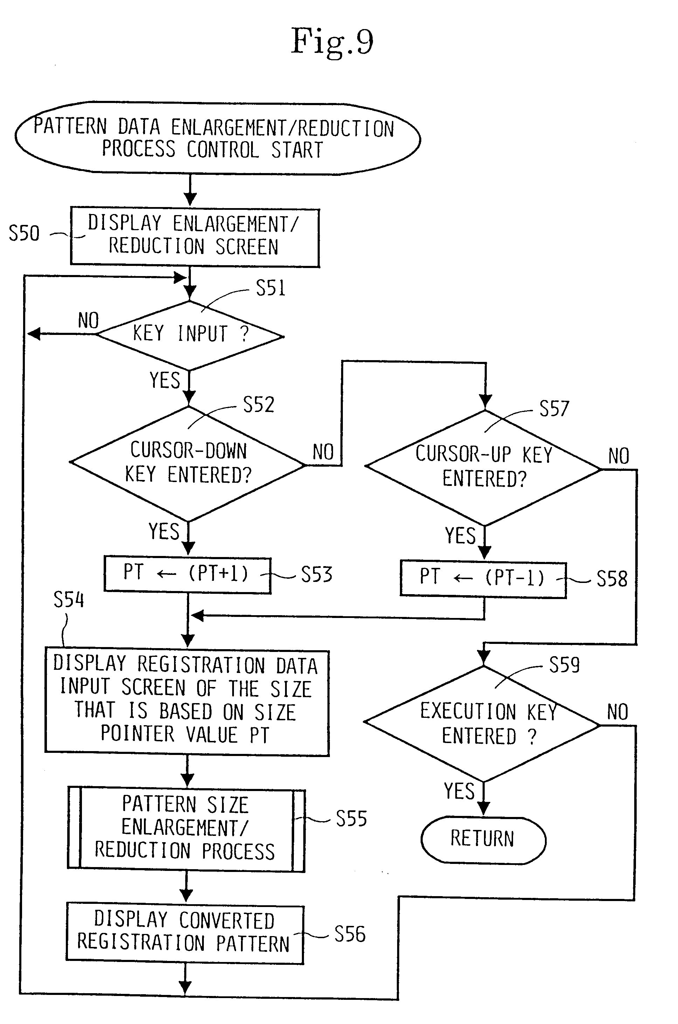

Next, when the enlargement/reduction key is operated (S37: yes, S38: no, S40: yes), the size pointed by a then size pointer value PT is held as the original size A in the work buffer in the RAM 40. Then, the pattern data enlargement/reduction process control (refer to Fig. 9) is carried out (S41).

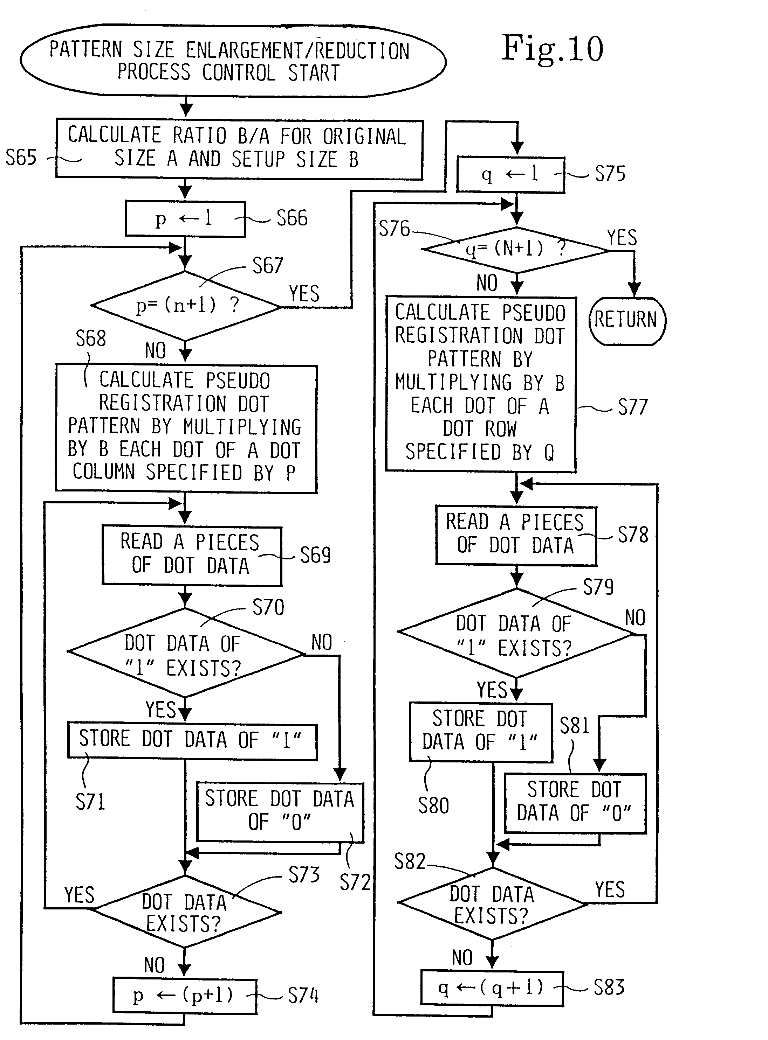

Once this control has begun, an enlargement/reduction screen is first displayed on the display device 22 (S50). Next, when the cursor down-moving key is operated (S51, S52: yes), the size pointer value PT is incremented by one (S53). A setup size B is evaluated based on the revised size pointer value PT, and a registration data input screen of the setup size B is displayed on the display device 22 (S54). Accordingly, the pattern size enlargement/reduction process control (refer to Fig. 10) is carried out (S55). For example, as shown in Fig. 14, a registration data input screen enlarged to a 9-mm size is displayed on the display device 22. Namely, the registration dot pattern display area D is enlarged to meet the 9-mm tape size.

Once this control has begun, the ratio B/A for the setup size B and original size A is first evaluated (S65). The subsequent steps S66-S74 are the longitudinal enlargement process for dot pattern data. The successive steps S75-S83 are the lateral enlargement process for the dot pattern data that has been enlarged in the longitudinal direction.

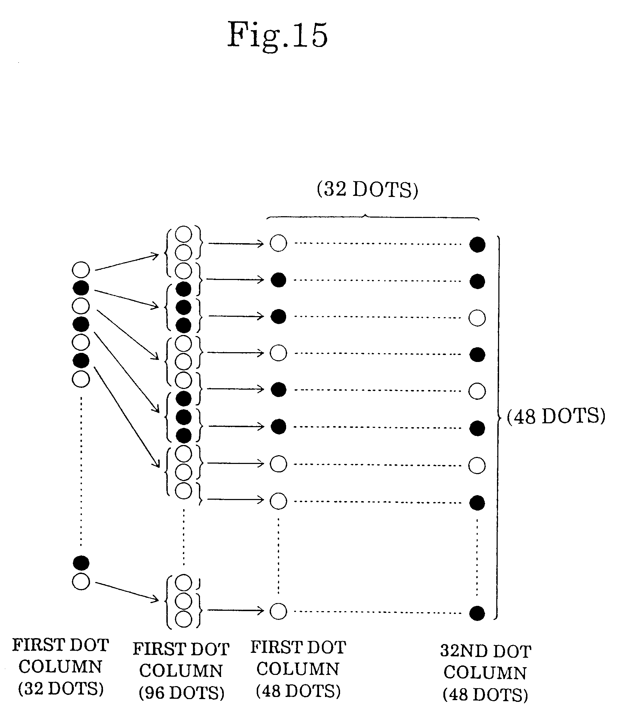

Next, initial value "1" for the first dot column is set as a dot column pointer value p that specifies a dot column of original registration dot pattern data stored in a registration data memory 42a-42j corresponding to the registration number X (S66). For the number of dots of n of the original size A, if the dot column pointer value p is not equal to n+1 (S67: no), pseudo registration dot pattern data is calculated by multiplication of B for the number of dots from the highest-order dot for a dot column pointed by the dot column pointer value p (this will be termed "the p-th dot column" herein-after). The data is stored in the first work memory in the RAM 40 (S68). For example, when the original size A is "M" (32 dots) and setup size is 9 mm (48 dots), the size ratio is 2/3. Accordingly, as shown in Fig. 15, dots of the first dot column made up of 32 dots are multiplied by three and enlarged to 96 dots.

Next, among the 96 dots of the enlarged p-th dot column, A pieces of dot data are read (S69), and if dot data of "1" exists in the A pieces of dot data (S70: yes), dot data of "1" is stored in a corresponding location of the second work memory in the RAM 40 (S71). However, if dot data of "1" does not exist in the A pieces of dot data (S70: no), dot data of "0" is stored in a corresponding location of the second work memory (S72). Next, if dot data to be read exists in the p-th dot column (S73: yes), S69 and following steps are repeated. If dot data to be read does not exist in the p-th dot column (S73: no), the dot column pointer value p is incremented by one (S74), and the steps S67-S74 are carried out repeatedly up to the n-th dot column. Namely, the second work memory now stores dot pattern data of 32 dots lateral by 48 dots longitudinal as shown in Fig. 15.

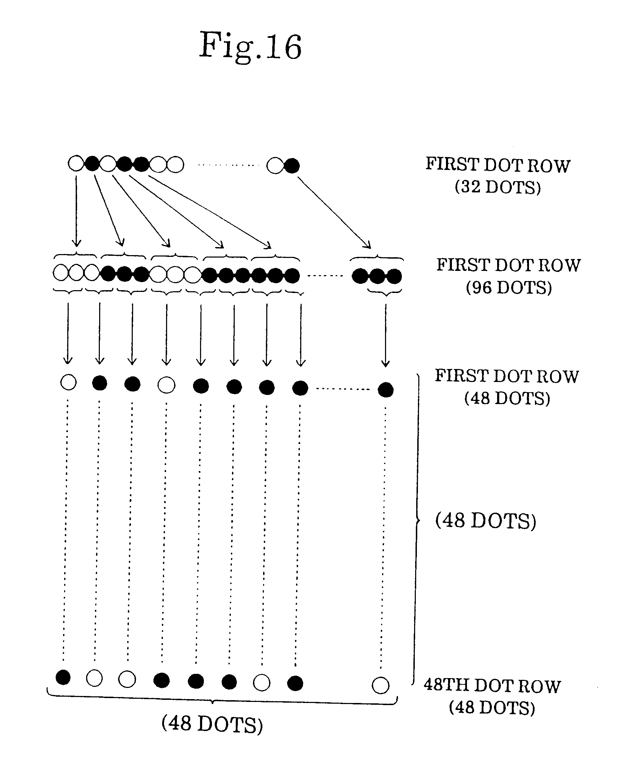

When the dot column pointer value p becomes equal to the number of dots n+1 (S67: yes), initial value "1" for the first dot row is set as a dot row pointer value q, which specifies a dot row of dot pattern data in the second work memory (S75). In virtually the same manner as S67 and following steps, if the dot row pointer value q is not equal to N+1, where N is the enlarged longitudinal dot number (S76: no), pseudo registration dot pattern data is calculated. The data is calculated by multiplication of B for the number of dots from the leftmost dot for a dot row pointed by the dot row pointer value q (this will be termed "the q-th dot row" hereinafter) among the dot pattern data stored in the second work memory. It is stored in the third work memory in the RAM 40 (S77). For example, as shown in Fig. 16, each dot of the first dot row made up of 32 dots is multiplied by three and enlarged to 96 dots.

Next, among the enlarged 96 dots of the q-th dot row, A pieces of dot data are read (S78). If dot data of "1" exists in the A pieces of dot data (S79: yes), the dot data of "1" is stored in a corresponding location of the enlargement/reduction dot pattern memory 44 (S80). However, if dot data of "1" does not exist in the A pieces of dot data (S79: no), dot data of "0" is stored in a corresponding location of the enlargement/reduction dot pattern memory 44 (S81). Next, if dot data to be read exists in the q-th dot row (S82: yes), the S78 and following steps are repeated.

If dot data to be read does not exist in the q-th dot row (S82: no), the dot row pointer value q is incremented by one (S83), and S76-S83 are carried out repeatedly up to the N-th dot row. Namely, the enlargement/reduction dot pattern memory 44 now stores registration dot pattern data of 48 dots lateral by 48 dots longitudinal as shown in Fig. 16. When the dot row pointer value q becomes equal to the number of dots N+1 (S76: yes), the control is terminated. The sequence returns to the enlargement/reduction process control of Fig. 9 to display the registration dot pattern in the enlargement/reduction dot pattern memory 44 in the registration dot pattern display area D of the display device 22 (S56), and the program returns to the foregoing process of S51. For example, in the registration dot pattern display area D of the registration data input screen of 9-mm size, a "face" of the enlarged registration pattern that is derived from the "face" of the original registration pattern of the "M" size shown in Fig. 13 is displayed as shown in Fig. 14.

When the cursor up-moving key is operated (S51: yes, S52: no, S57: yes), the size pointer value PT is decremented by one (S58). After the implementation of S54, the foregoing pattern size enlargement/reduction process control is carried out (S55). The registration dot pattern data in the enlargement/reduction dot pattern memory 44 is displayed in the registration dot pattern display area D of the display device 22 (S56) in the same manner, and the program returns to the above-mentioned process of S51.

In this manner, when the execution key is operated at the time point when an intended size has been selected through the operation of the cursor up-moving key or cursor down-moving key (S51: yes, S52, S57: no, S59: yes), this pattern data enlargement/reduction process control is terminated. The program then returns to S37 of pattern creation process control.

Next, during the pattern creation process control, when the execution key is operated (S37: yes, S38, S40: no, S42: yes), the pattern data registration process that stores the registration dot pattern data in the enlargement/reduction dot pattern memory 44 and the size pointer value in a registration data memory 42a-42j corresponding to the registration number X is carried out (S43). On completion of this control and the pattern creation-registration process control, the program returns to S11 of tape print control.

However, when the cancellation key is operated (S37: yes, S38, S40, S42: no, S44: yes), the termination process that clears the registration dot pattern data in the enlargement/reduction dot pattern memory 44 is carried out (S45). Then, the program returns to S11 of tape print control.

If the cancellation key is operated during the pattern creation-registration process control, (S22: yes, S23, S25: no, S28: yes), the termination process that erases the registration number selection screen is carried out (S29), and the program returns to S11 of tape print control.

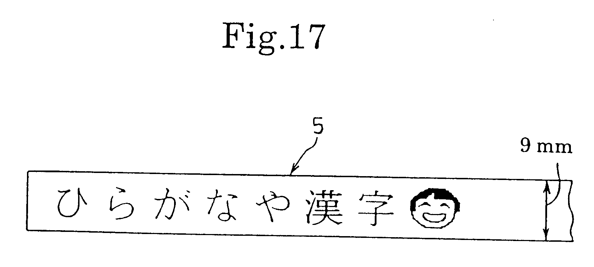

Furthermore, during the tape print control, when a key other than a text making key or registration key is operated (S11: yes, S12, S15: no), the printing process corresponding to the operated key is carried out (S17). Next, the program returns to S11. Namely, in case a 9-mm tape width is set as a print size as shown in Fig. 14, the registered pattern of the "face" created for the print tape 5 of 9-mm tape width can be printed in an optimal tape width as shown in Fig. 17. Moreover, with size "M" or "L" being set, a registration pattern of characters and marks of that size can be printed on the print tape 5.

As explained above, original registration dot pattern data entered in the registration data input screen corresponding to the original size A is stored by being formed in enlarged registration dot pattern data depending on the ratio B/A at the time of setting of the setup size B. Therefore, even in the case of a registration dot pattern made up of a large number of dots, a large-sized registration pattern can be created easily in a short time by merely creating an original registration dot pattern of a small size. After the number of dots of the original registration dot pattern data has been multiplied by B in the longitudinal and lateral directions based on the ratio B/A, registration dot pattern data, which is a reduced version by 1/A fold, is created in accordance with the predetermined rule. Therefore, enlargement is possible while virtually retaining the shape of the registration dot pattern data, as compared with the case of enlargement following the reduction of the original registration dot pattern data.

The size-dot correspondence table TB may be provided with size items of many sizes. Original registration dot pattern data and registration dot pattern data may be stored in separate memories. The present invention is of course applicable to registration dot pattern data processors of various text processing apparatus having pattern registration functions.

Also, while the preferred embodiment has been described as first vertically converting columns of dots and then horizontally converting rows of dots, the conversion may begin with rows of dots and then proceed to the columns of dots.

While advantageous embodiments have been chosen to illustrate the invention, it will be understood by those skilled in the art that various changes and modifications can be made therein without departing from the scope of the invention as defined in the appended claims.

## Claims

1. A data processor comprising:
an input that inputs image data of an image having an original size;
a mode setter that selectively sets a pattern creation registration mode;
an original registration data memory that stores registration numbers corresponding to original registration dot pattern data;
a size conversion processor that selectively varies a size of the original input image data by selecting a registration number and determining new registration dot pattern data for a setup size;
a registration data memory that stores the new determined registration dot pattern data; and
an image pattern creator that creates an image based on the input image having a size corresponding to the new registration dot pattern data.

2. The data processor of claim 1 further comprising a printing mechanism that prints the created image based on the new registration dot pattern data.

3. The data processor of claim 2 wherein the printing mechanism is a tape printer.

4. The data processor of claim 1 further comprising a display that displays input image data and a registration number selection.

5. The data processor of claim 4 wherein said display includes a display device and display controller that controls said display device, wherein said size conversion processor selects a different size from values from said original registration data memory displayed on said display device and controlled by said display controller.

6. The data processsor of any preceding claim wherein said size conversion processor produces pseudo registration dot pattern data derived from original registration dot pattern data and a ratio of the original size of the image and the setup size.

7. The data processor of claim 6 wherein said pseudo registration dot pattern data is determined by changing a number of dots in longitudinal and lateral directions based on the ratio for the setup size and original size.

8. The data processor of claim 6 or 7 wherein said size conversion processor produces new registration dot pattern data derived from the pseudo registration dot pattern data.

9. A registration dot pattern data processor of a text processing apparatus comprising:
input means for entering images and commands;
printing means for printing images based on the input images in dot patterns on a printing medium;
display means for displaying input images and images for printing;
mode setting means for setting a registration mode for producing dot pattern data of an input image and registering the dot pattern data;
original registration data storage means for storing original registration dot pattern data of an image in said registration mode;
size setting means for setting a different size for the dot pattern data of the image entered in said registration mode;
size conversion processing means for determining a magnification factor based on an original size of the input image and the size set by said size setting means, and for producing new registration dot pattern data based on said magnification factor for the original registration dot pattern data; and
registration data memory means for storing the new registration dot pattern data produced by said size conversion processing means.

10. The registration dot pattern data processor of claim 9 wherein said size conversion processing means produces pseudo registration dot pattern data derived from original registration dot pattern data and a ratio of the original size of the image and the different size set for the image.

11. The registration dot pattern data processor of claim 10 wherein said pseudo registration dot pattern data is determined by changing a number of dots in longitudinal and lateral directions based on the size ratio.

12. The registration dot Pattern data processor of claim 10 or 11 wherein said size conversion processing means produces new registration dot pattern data derived from the pseudo registration dot pattern data.

13. The registration dot pattern data processor of any of claims 9 to 12 wherein said display means includes a display device and display controller that controls said display device, wherein said size setting means selects a different size from values displayed on said display device and controlled by said display controller.

14. The registration dot pattern data processor of any of the claims 9 to 13 further comprising a registration data memory means for storing registration numbers and corresponding registration dot pattern data with size pointer values, and wherein said size setting means sets a different size based on the stored registration numbers.

15. A method of processing registration dot pattern data comprising the steps of:
inputting data corresponding to an image;
storing registration numbers that correspond to original registration dot pattern data;
selecting a registration number;
setting a size pointer value based on the selected registration number;
creating a pattern of the input image having an original size based on registration dot pattern data;
revising the size pointer value to change the pattern size of the image to a setup size;
determining a ratio of the setup size to the original size;
determining new registration dot pattern data based on the ratio of the setup size to the original size;
storing the new registration dot pattern data; and
creating a pattern of the image based on the new registration dot pattern data.

16. The method of claim 15 wherein the step of selecting a registration number includes displaying a registration selection screen and operating a cursor to point and select a displayed number.

17. The method of claim 15 wherein the step of selecting a registration number further includes selecting a default size and inputting registration data.

18. The method of claim 15, 16 or 17 wherein the step of determining the new registration dot pattern data includes determining pseudo registration dot pattern data for longitudinal dots and determining pseudo registration dot pattern data for lateral dots and storing the pseudo registration dot pattern data as the new registration dot pattern data.

19. A registration dot pattern data processor of a text processing apparatus, comprising:
input means for entering images and commands;
printing means for printing images based on the input images in dot patterns on a printing medium;
display means for displaying input images and images for printing;
mode setting means for setting a registration mode for producing dot pattern data of an input image and registering the dot pattern data;
size setting means for setting a size of an image to be printed on the printing medium;
registration display instructing means for instructing said display means to display a registration data input screen of image size set by said size setting means and corresponding dot pattern data when said registration mode is set;
size conversion processing means for producing dot pattern data for an image for printing based on the dot pattern data produced in the registration mode for the input image and the dot pattern data from the registration data input screen for the set size; and
registration data memory means for storing the dot pattern data from said size conversion processing means.

20. A registration dot pattern data processor of a text processing apparatus, comprising:
input means for entering images and commands;
printing means for printing images based on the input images in dot patterns on a printing tape;
display means for displaying input images and images for printing;
mode setting means for setting a registration mode for producing dot pattern data of an input image and registering the dot pattern data;
tape width setting means for setting a width for a printing tape;
registration display instructing means for instructing said display means to display a registration data input screen of image size corresponding to the tape width set by said tape width setting means based on a relationship between preset tape widths and image sizes when said registration mode is set;
size conversion processing means for producing dot pattern data for an image for printing based on the dot pattern data produced in the registration mode and the image size from the registration data input screen; and
registration data memory means for storing the dot pattern data from said size conversion processing means.

21. The registration dot pattern data processor of claim 19 or 20 wherein said size conversion processing means produces the dot pattern data by changing a number of dots in the dot pattern data produced in the registration mode separately in longitudinal and lateral directions.
